# FASCICULE DE BREVET EUROPEEN

(11) **EP 2 440 768 B1**
(45) Date de publication et mention de la délivrance du brevet: **13.02.2013**
(21) Numéro de dépôt: 10728772.4
(22) Date de dépôt: 18.05.2010
(51) Int. Cl.: F02K 1/72, F02K 1/76

(54) **DISPOSITIF D'INVERSION DE POUSSÉE**
SCHUBUMKEHRVORRICHTUNG
THRUST REVERSING DEVICE

(30) Priorité: 10.06.2009 FR 0902807
(43) Date de publication de la demande: 18.04.2012
(73) Titulaire: Aircelle, 76700 Gonfreville l'Orcher (FR)
(72) Inventeur: VAUCHEL, Guy, Bernard, F-76700 Harfleur (FR)
(74) Mandataire: Gaillarde, Frédéric F. Ch.
(86) Numéro de dépôt international: PCT/FR2010/050953
(87) Numéro de publication internationale: WO 2010/142881

(56) Documents cités:
- EP-A1- 0 851 111
- EP-A1- 1 128 052
- FR-A1- 2 887 854
- FR-A1- 2 907 512
- FR-A1- 2 917 788
- FR-A1- 2 922 058

## Description

La présente invention concerne une nacelle de turboréacteur comprenant un dispositif d'inversion de poussée et une section de tuyère variable.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un dispositif d'inversion de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des éléments mobiles déplaçables entre, d'une part, une position déployée dans laquelle ils ouvrent dans la nacelle un passage destiné au flux dévié, et d'autre part, une position d'escamotage dans laquelle ils ferment ce passage.

Ces éléments mobiles peuvent remplir une fonction de déviation ou simplement d'activation d'autres moyens de déviation.

On connait ainsi les inverseurs à grilles dans lesquels la réorientation du flux d'air est effectuée par des grilles de déviation, l'élément mobile consistant alors en un capot coulissant visant à découvrir ou recouvrir ces grilles, la translation de ce capot s'effectuant selon un axe longitudinal sensiblement parallèle à l'axe de la nacelle.

Par ailleurs, outre sa fonction d'inversion de poussée, le capot coulissant présente un côté aval formant la tuyère d'éjection visant à canaliser l'éjection des flux d'air.

Cette tuyère d'éjection comprend une série de panneaux mobiles montés en rotation à une extrémité aval du capot coulissant.

Ces panneaux sont adaptés pour, d'une part, pivoter vers une position entrainant une variation de section de la tuyère et, d'autre part, pivoter vers une position dans laquelle, en situation d'inversion de poussée, ils viennent obturer la veine en vue de dévier le flux froid vers les grilles de déviation découvertes par le coulissement du capot mobile.

La cinématique d'actionnement d'une telle tuyère est complexe.

En effet, la tuyère étant montée sur le capot mobile, les panneaux mobiles doivent être associés à un système d'actionnement permettant, d'une part, de les entrainer simultanément et de façon synchronisée avec le capot mobile lors de l'inversion de poussée lorsque le capot se déplace pour découvrir les grilles de déviation et, d'autre part, de les entraîner lorsque le capot est en position d'escamotage pour adapter la section optimale de la tuyère d'éjection en fonction des différentes phases de vol, à savoir les phases de décollage, de croisière et d'atterrissage de l'avion.

On connaît plusieurs systèmes d'actionnement dédiés pour répondre à la cinématique particulière désirée des panneaux de la tuyère variable et du capot mobile; voir par exemple le document EP 1 128 052 A1.

Or, ils ne sont satisfaisants.

La fiabilité de tels systèmes s'en trouve affectée et les difficultés de maintenance sont multipliées.

En effet, en premier lieu, afin d'assurer le guidage des panneaux d'une position à une autre, les systèmes d'actionnement connus prévoit un actionneur linéaire relié au capot mobile et à l'extrémité amont d'un ou plusieurs panneaux.

On constate, cependant, que les déplacements de chaque actionneur lors des déplacements en rotation des panneaux ne sont pas linéaires.

L'actionneur étant soumis à des efforts liés au pivotement des panneaux selon différents angles et, notamment, au pivotement vers l'extérieur de la veine, il peut être affecté par un phénomène de déviation qui engendre des écarts non désirés dans ses déplacements par rapport à sa trajectoire rectiligne.

Une première conséquence d'une telle déviation est d'avoir une cinématique d'actionneur qui sorte des lignes de la nacelle en cours de manoeuvre obligeant d'avoir un différentiel de position par rapport au capot mobile non parallèle à son déplacement.

De plus, ces écarts non désirés peuvent impliquer de modifier la disposition de l'actionneur par rapport aux grilles de déviation.

La structure de la structure externe du capot mobile est également altérée par l'interruption de la continuité de lignes aérodynamiques due au débattement de l'actionneur vers l'extérieur.

Par ailleurs, afin d'assurer le pivotement des panneaux d'une position à une autre, on prévoit également des bielles d'entrainement rattachées, d'une part, au panneau, et d'autre part, à un point fixe de la structure interne de carénage du turboréacteur délimitant la veine de flux froid.

Or, la présence de ces bielles de guidage traversant la veine engendre de nombreuses perturbations aérodynamiques dans une zone à grande vitesse de déplacement du flux froid par la traînée induite.

Les points d'ancrage de ces bielles sur la structure interne de carénage du turboréacteur présentent également un inconvénient.

En effet, du fait que la structure mobile du dispositif et la structure interne de carénage du turboréacteur ne sont pas indépendantes l'une de l'autre, les déformées relatives vues par les deux structures peuvent engendrer des écarts de section de tuyère non désirés pendant les différentes phases de vol.

De plus, avec une telle dépendance, les opérations de maintenance se compliquent.

Par ailleurs, on constate, dans les dispositifs d'inversion de poussée existants, des déplacements importants du capot mobile en phase de variation de section de tuyère impliquant de prévoir des recouvrements de structure entre le capot mobile et la structure fixe du dispositif et d'augmenter la longueur totale de déploiement des actionneurs utilisés.

Ces déplacements impliquent, également, une rupture de continuité des lignes aérodynamiques externes de la nacelle, ceci afin d'assurer la phase de rétractation vers l'amont du capot mobile lors du pivotement des panneaux vers leur position augmentant la section de tuyère.

Par ailleurs, la fiabilité des systèmes d'étanchéité entre le capot mobile et la structure fixe du dispositif d'inversion de poussée se trouve affectée par la multiplication de ces déplacements.

Un but de la présente invention est de pallier les problèmes définis ci-dessus.

Ainsi, un but de la présente invention est de proposer un dispositif d'inversion de poussée et de variation de section de tuyère présentant une structure simplifiée.

Il est également important d'offrir un dispositif d'inversion de poussée dans lequel les déplacements de l'actionneur pendant les phases de manoeuvre du capot mobile et des panneaux de la tuyère variable sont maitrisés.

Un autre but de la présente invention est de proposer un dispositif d'inversion de poussée limitant les déplacements du capot mobile lors des phases de variation de section de tuyère.

Il est également désirable d'offrir un dispositif d'inversion de poussée qui réduit les pertes aérodynamiques dans la veine et assure efficacement l'étanchéité entre la veine et l'externe nacelle.

Enfin, un dernier but de la présente invention est de proposer un dispositif d'inversion de poussée dans lequel la structure mobile du dispositif et la structure interne de carénage du turboréacteur sont totalement dissociés.

A cet effet, l'invention propose un dispositif d'inversion de poussée comprenant au moins un capot mobile monté en translation selon une direction sensiblement parallèle à un axe longitudinal d'une nacelle apte à passer alternativement d'une position de fermeture dans laquelle il assure la continuité aérodynamique de la nacelle à une position d'ouverture dans laquelle il ouvre un passage dans la nacelle destiné à un flux dévié, ledit capot mobile étant également prolongé par au moins une section de tuyère variable, ladite tuyère comprenant au moins un panneau monté mobile en rotation, ledit panneau étant adapté pour d'une part pivoter vers au moins une position entraînant une variation de la section de la tuyère et, d'autre part, pivoter vers une position dans laquelle il obstrue une veine de flux froid formée entre une structure fixe de carénage d'un turboréacteur et la nacelle, le capot mobile et le panneau étant associés à des moyens d'actionnement aptes à activer leur déplacement respectif en translation et en rotation remarquable en ce que lesdits moyens d'actionnement sont reliés à une extrémité amont du panneau par une bielle d'entrainement montée mobile autour de points d'ancrage respectivement sur le panneau mobile correspondant et sur les moyens d'actionnement associés.

Grâce à la présente invention, les déplacements des moyens d'actionnement restent rectilignes selon une direction sensiblement parallèle à l'axe longitudinal de la nacelle quelles que soient les phases de manoeuvre du capot mobile et des panneaux de la tuyère variable.

Avantageusement, on supprime également les bielles d'entrainement traversant la veine de flux froid de la nacelle.

Selon des modes particuliers de réalisation, le dispositif d'inversion de poussée peut comprendre l'une ou plusieurs des caractéristiques suivantes, prises isolément ou selon toutes les combinaisons techniquement possibles :
- deux bielles d'entrainement entourent les moyens d'actionnement du panneau ;
- la ou les bielles d'entrainement présentent une forme coudée ;
- la ou les bielles d'entrainement sont associées à un carénage de sorte que la continuité aérodynamique des lignes externe de la nacelle est assurée ;
- les moyens d'actionnement comprennent un actionneur linéaire formé de trois corps concentriques, à savoir, un corps central, un corps externe et un corps interne, tous trois formant tiges, le corps central présentant un premier filetage, externe, apte à coopérer avec un filetage correspondant du corps externe et un deuxième filetage, interne, apte à coopérer avec un filetage correspondant du corps interne, l'un des corps étant bloqué en translation et apte à être relié à des moyens d'entraînement en rotation adaptés tandis que les deux autres corps, destinés chacun à être relié au capot et au panneau à entraîner, sont libres en translation et bloqués en rotation ;
- le corps relié aux moyens d'entraînement en rotation est le corps central, le corps interne est destiné à être relié au capot mobile tandis que le corps externe est destiné à être relié à la bielle d'entraînement en pivotement du panneau ;
- le filetage externe du corps central possède un pas supérieur au pas présenté par le filetage interne ;
- les moyens d'actionnement comprennent deux actionneurs linéaires distincts associés respectivement au capot et au panneau à entrainer, chacun des actionneurs comprenant une tige apte à permettre, respectivement, le pivotement du panneau vers une position où il obstrue la veine de flux froid et vers une position entrainant la variation de la section de la tuyère ainsi que le déplacement en translation du capot ;
- les moyens d'actionnement sont associés à des moyens de commande aptes à réaliser un déplacement différentiel contrôlé du panneau et du capot à entrainer ;
- le panneau est monté mobile en rotation autour d'un pivot selon un axe perpendiculaire à l'axe longitudinal de la nacelle ;
- le dispositif d'inversion de poussée comprend, en outre, des moyens d"étanchéité amont entre la veine de flux froid et l'externe de la nacelle agencés sous des moyens de déviation ;
- le dispositif d'inversion de poussée comprend, en outre, des moyens d"étanchéité aval entre une structure interne du capot et le panneau ;
- le panneau est prolongé par une virole aval fixe.

L'invention propose également une nacelle de turboréacteur double flux comprenant une section aval équipée d'un dispositif d'inversion de poussée tel que précité.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- La figure 1 est une représentation schématique en coupe longitudinale d'un dispositif d'inversion de poussée selon un premier mode de réalisation de la présente invention dans une position en jet direct ;
- Les figures 2a et 2b sont des représentations en coupe longitudinale d'un actionneur du dispositif d'inversion de poussée de la figure 1 respectivement en position rétractée et en position déployée ;
- Les figures 3 à 5 sont des représentations schématiques en coupe longitudinale du dispositif d'inversion de poussée de la figure 1 présentant des panneaux mobiles respectivement dans une position de tuyère ouverte, une position de tuyère fermée et une position en jet inverse;
- La figure 6 est une représentation schématique en coupe longitudinale d'un dispositif d'inversion de poussée selon un second mode de réalisation de la présente invention dans une position en jet direct ;
- La figure 7 est une représentation schématique en coupe longitudinale du dispositif d'inversion de poussée de la figure 6 dans une position en jet inverse ;
- La figure 8 est une représentation schématique en coupe longitudinale du dispositif d'inversion de poussée de la figure 6 mettant en évidence des moyens d'actionnement d'un capot mobile dudit dispositif;
- La figure 9 est une vue en coupe de grilles de déviation du dispositif d'inversion de poussée de la figure 1 selon le plan P' visible sur la figure 1 ;
- La figure 10 est une vue en coupe d'un système de coulissement d'un actionneur du dispositif d'inversion de poussée de la figure 1 selon le plan P visible sur la figure 1;
- La figure 11 est une représentation schématique en coupe longitudinale d'un dispositif d'inversion de poussée selon un troisième mode de réalisation de la présente invention dans une position en jet direct ;
- La figure 12 est une vue agrandie de la zone A du dispositif d'inversion de poussée de la figure 11 ;
- La figure 13 est une représentation schématique en coupe longitudinale d'un dispositif d'inversion de poussée selon un quatrième mode de réalisation de la présente invention ;
- Les figures 14 à 16 sont des représentations schématiques en coupe longitudinale d'un panneau mobile d'un dispositif d'inversion de poussée selon un cinquième mode de réalisation respectivement en position de jet direct, en position de tuyère variable et en position de jet inverse.

Une nacelle est destinée à constituer un logement tubulaire pour un turboréacteur double flux et sert à canaliser les flux d'air qu'il génère par l'intermédiaire de pales d'une soufflante, à savoir un flux d'air chaud traversant une chambre de combustion et un flux d'air froid circulant à l'extérieur du turboréacteur.

La nacelle possède de façon générale une structure comprenant une section amont formant une entrée d'air, une section médiane entourant la soufflante du turboréacteur et une section aval entourant le turboréacteur.

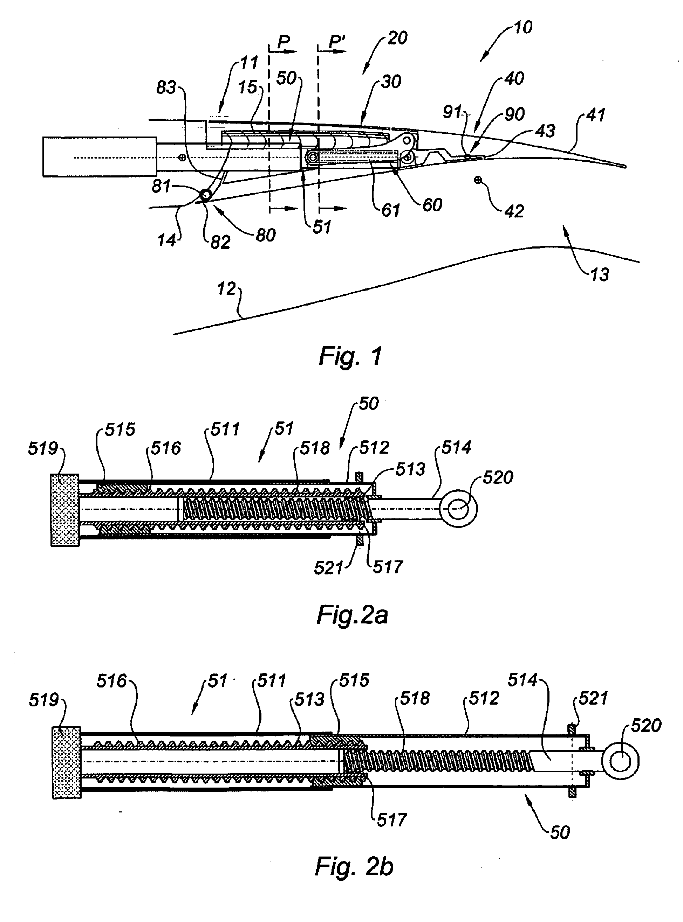

On a représenté, sur la figure 1, une partie de cette section aval, désignée par la référence générale 10.

Cette section aval 10 comprend une structure externe 11 comportant un dispositif d'inversion de poussée 20 et une structure interne 12 de carénage de moteur définissant avec la structure externe 11 une veine 13 destinée à la circulation d'un flux froid dans le cas de la nacelle de turboréacteur double flux telle que présentée ici.

La section aval 10 comprend, en outre, un cadre avant 14, un capot mobile 30 et une section de tuyère d'éjection 40.

Le capot mobile 30 est destiné à être actionné selon une direction sensiblement longitudinale de la nacelle entre une position de fermeture dans laquelle il vient au contact du cadre avant 14 et assure la continuité aérodynamique des lignes externes de la section aval 10 et une position d'ouverture dans laquelle il est écarté du cadre avant 14, ouvrant alors un passage dans la nacelle en découvrant des grilles 15 de déviation de flux d'air.

Le déplacement du capot mobile 30 se fait par un système de rail/coulisseau connu de l'homme de métier.

Par ailleurs, la section de tuyère d'éjection 40 dans le prolongement du capot mobile 30 comprend une série de panneaux mobiles 41 montés en rotation à une extrémité aval du capot mobile 30 et répartis sur la périphérie de la section de tuyère d'éjection 40.

Chaque panneau 41 est adapté pour, d'une part, pivoter vers une position entrainant une variation de la section de la tuyère 40 et, d'autre part, pivoter vers une position dans laquelle il obstrue la veine 13 de flux froid et renvoient cet air vers les grilles de déviation 15 qui assurent la réorientation du flux permettant ainsi l'inversion de poussée.

Chaque panneau 41 est porté par le capot mobile 30 par l'intermédiaire de points pivot 42 selon un axe perpendiculaire à l'axe longitudinal de la nacelle avec la partie interne du capot mobile 30 et avec ledit panneau mobile 41.

Selon l'invention, le passage d'une position à une autre d'un panneau mobile 41 est commandé par des moyens d'actionnement 50 reliés au panneau 41 par l'intermédiaire d'un système d'entraînement 60 constitué d'au moins une bielle d'entrainement 61 en aval de leur structure.

Les moyens d'actionnement 50 sont aptes à activer le déplacement du capot mobile 30 ainsi que le pivotement du panneau 41 vers une position entrainant la variation de la section de la tuyère 40 et vers une position où il obstrue la veine 13 de flux froid.

Ils comprennent au moins un actionneur linéaire électrique, hydraulique ou pneumatique.

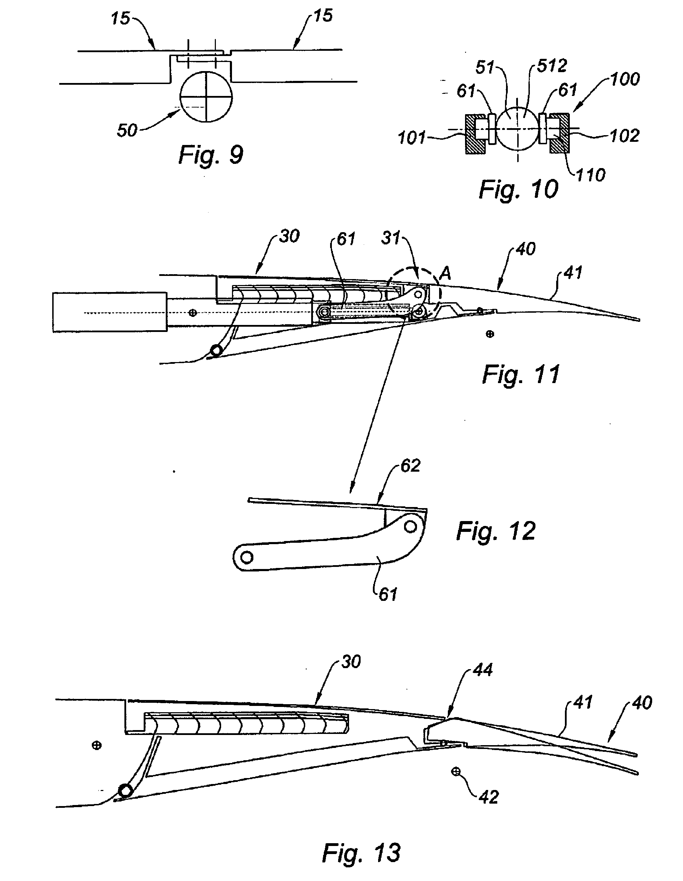

Tel qu'illustré sur la figure 9, l'actionneur peut être placé entre deux lignes d'attache des grilles de déviation 15.

Une variante de réalisation peut proposer un actionneur détaché des grilles de déviation 15 et susceptible d'être orienté dans n'importe quelle position angulaire souhaitée.

Dans un premier mode de réalisation de la présente invention illustré sur les figures 2a et 2b, l'actionneur est un actionneur à double action à effet programmé 51.

Par actionneur à double action à effet programmé, on entend un actionneur apte à entrainer à des vitesses différentes mais avec un même entrainement de puissance, le capot mobile 30 et le panneau 41 de la tuyère 40 par rapport au cadre avant 14 fixe.

Plus précisément, en référence aux figures 2a et 2b, un tel actionneur 51 comprend une base 511 cylindrique à l'intérieur de laquelle sont logés trois corps tubulaires concentriques formant tiges à savoir un corps externe 512, un corps central 513 et un corps interne 514.

La base 511 est destinée à être rattachée au cadre avant 14 par l'intermédiaire typiquement d'un système de cardan ou de rotule connus de l'homme du métier.

Chacun des trois corps tubulaires 512, 513, 514 est engagé mécaniquement avec le corps adjacent par le biais de filetage externe et/ou interne.

Plus précisément, dans le mode de réalisation illustré sur les figures 2a et 2b, le corps externe 512 présente un filetage intérieur 515 engagé avec un filetage externe 516 correspondant porté par le corps central 513, celui-ci présentant également un filetage interne 517 engagé avec un filetage externe 518 correspondant porté par le corps interne 514.

Par ailleurs, le corps central 513 est bloqué en translation et monté en rotation sur des moyens d'entraînement 519 en rotation logés dans la base 511 de l'actionneur 51. Le corps externe 512 et le corps interne 514 sont, quant à eux, bloqués en rotation et laissés mobiles en translation comme le montre la figure 2b.

En effet, le corps interne 514 est apte à permettre le déplacement du capot mobile 30. Pour ce faire, le corps interne 514 comprend, à son extrémité aval, un oeillet de fixation 520 destiné à être fixé à la partie interne du capot mobile 30.

Le corps externe 512 est, quant à lui, apte à permettre le pivotement d'un panneau 41 de la tuyère 40.

Il est ainsi relié à son extrémité aval à l'extrémité amont du panneau 41 par l'intermédiaire d'au moins la bielle d'entrainement 61 précitée articulée sur un axe d'entrainement transversal 521 prévu, à cet effet, sur sa structure.

Ainsi, le déplacement du corps externe 514 vers l'amont ou vers l'aval de la nacelle s'accompagne du pivotement de la bielle d'entrainement 61 et par conséquent, du panneau 41.

Concernant le système d'entrainement 60 par bielles, la longueur ainsi que les points d'entrainement de la bielle 61 sur l'extrémité amont du panneau mobile 41 sont adaptés pour permettre l'obturation efficace de la veine 13 de flux froid par le panneau 41 en jet inverse.

De préférence, le point d'entraînement de la bielle 61 sur l'extrémité amont du panneau 41 doit être placé le plus en amont possible pour réaliser le plus grand bras de levier possible avec le pivot 42 du panneau 41 comme cela sera décrit plus loin.

Cette position amont est limitée par la présence des grilles de déviation 15.

Par ailleurs, un premier mode de réalisation prévoit une série de deux bielles d'entrainement 61 entourant le corps externe 512 de l'actionneur 51 c'est-à-dire des bielles articulées autour d'un axe transversal de part et d'autre du corps externe 512 de l'actionneur 51.

Dans un second mode de réalisation, une seule bielle d'entrainement 61 par panneau 41 est nécessaire. Pour cela, dans un exemple non limitatif, le point d'entrainement de la bielle 61 sur l'actionneur 51 peut être prévu sur le corps externe 512 reporté en chape vers l'externe de la nacelle.

Par ailleurs, dans une autre variante de réalisation, on peut prévoir des bielles d'entrainement 61 conformées de façon à améliorer la cinématique et les jeux entre les panneaux pivotant et l'aval des grilles 15.

Ainsi, dans un exemple non limitatif illustré sur la figure 1, chaque bielle d'entrainement 61 peut présenter une forme coudée, ceci afin de réduire voire d'annuler la nécessité de créer un passage en aval des grilles de déviation 15 pour le débattement de la bielle 61.

Ceci offre également l'avantage de ne pas interrompre la structure des grilles de déviation 15.

Grâce à un tel système d'entrainement, l'actionneur 51 maintient sa trajectoire rectiligne selon l'axe longitudinal de la nacelle lors de son extension et sa rétractation pour déplacer le capot mobile 30 et les panneaux 41 de la tuyère 40.

Lors de l'augmentation de la section de tuyère 40 notamment, l'axe passant par les deux points d'entrainement de la bielle 61 forme un bras de levier avec le pivot 42 du panneau 41, ceci afin de garantir un effort dans l'actionneur 51 admissible dans cette phase de variation de section de tuyère 40 lui permettant de ne pas subir de déviation dans ses déplacements tout en conservant un déplacement rectiligne dudit actionneur.

De plus, avantageusement, un tel système d'entrainement offre une grande fiabilité car le nombre d'éléments d'entrainement présents dans la veine 13 de flux froid est diminué par rapport aux dispositifs d'inversion de poussée de l'art antérieur.

En effet, on s'affranchit de disposer des bielles d'entrainement 61 à travers la veine 13 pour les fixer sur la structure interne 12 de carénage du moteur pour obturer la veine 13 de manière à optimiser l'inversion du flux froid.

La structure 11 mobile de la section aval 10 devient, également, indépendante de la structure interne 12 de carénage du moteur, ce qui facilite les opérations de maintenance de la nacelle.

Par ailleurs, en prévoyant un actionneur à double action à effet programmé, le capot mobile 30 et les panneaux mobiles 41 sont actionnés avec une cinématique qui leur est propre lors du réglage de la variation de section de tuyère 40 ou lors de l'inversion de poussée.

En effet, par le biais de pas de filetage différent entre les différents corps 512, 513, 514 de l'actionneur 51 et un même entrainement de puissance, on adapte automatiquement les courses et les vitesses de déplacement du capot mobile 30 et du panneau mobile 41 entre eux et par rapport au cadre avant 15.

Ceci offre l'avantage de pouvoir limiter à de très faibles déplacements voire aucun les déplacements du capot mobile 30 lors des phases de pivotement du panneau mobile 41 dans une position permettant d'augmenter ou de réduire la section de la tuyère d'éjection 40.

Le fonctionnement du dispositif d'inversion de poussée 20 est le suivant.

Lorsque les moyens d'actionnement 519 entraînent le corps central 513 en rotation, il communique ce mouvement aux corps externe 512 et interne 514 par le biais des filetages externe 515, 516 et interne 517, 518 respectifs.

Les corps externe 512 et interne 514 étant bloqués en rotation, le mouvement d'entraînement du corps central 513 est transformé en mouvement de translation des corps externe 512 et interne 514.

La direction et la vitesse linéaire de translation de chacun de corps dépendent respectivement du sens de rotation des moyens d'entraînement 519 et de l'orientation et du pas de chaque filetage.

Dans un mode de réalisation de la présente invention, le pas des filetages externes 515, 516 est supérieur au pas des filetages internes 517, 518. Il s'ensuit que le corps externe 512 se déplacera en translation à une vitesse supérieure à celle du corps interne 514 et par conséquent, le panneau 41 se déplacera plus rapidement que le capot mobile 30.

Le mouvement de translation du corps externe 512 s'accompagne d'un pivotement de la ou des bielles d'entrainement 61 et, par conséquent, du pivotement du panneau 41.

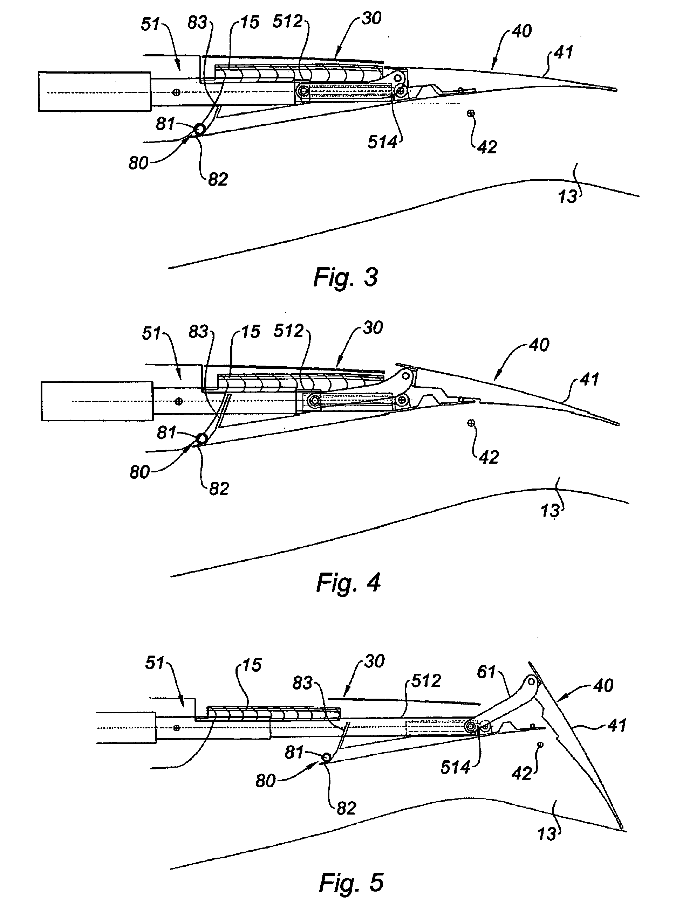

Les figures 3 à 5 montrent différentes positions du panneau mobile 41 en fonction du déploiement de l'actionneur linéaire à effet programmé et du degré de déplacement du capot 30.

Sur la figure 3, le capot mobile 30 est en position de fermeture recouvrant les grilles de déviation 15.

Il n'a pas été déplacé, le corps interne 514 de l'actionneur 51 étant resté pratiquement fixe.

Le corps externe 512 de l'actionneur 51 a été, quant à lui, actionné et rétracté vers l'amont de la nacelle entrainant alors le pivotement du panneau mobile 41 de son pivot 42 vers l'extérieur de la veine 13 augmentant ainsi la section de la tuyère 40.

Sur la figure 4, le corps externe 512 de l'actionneur 51 a été actionné et étendu vers l'aval de la nacelle entrainant alors le pivotement du panneau mobile 41 autour de son pivot 42 vers l'intérieur de la veine 13 diminuant ainsi la section de la tuyère 40.

Pendant ces deux phases de réglage de section de la tuyère d'éjection 40, le capot mobile 30 n'a pas ou très peu modifiée sa position de fermeture des grilles de déviation 15.

De plus, des moyens d'étanchéité en amont et en aval du capot mobile 30, qui seront décrits plus loin, sont restés actifs.

Plus précisément, comme illustré sur les figures 3 et 4, l'étanchéité amont 80 n'est pas impactée par le déplacement du panneau 41 et les jeux nécessaires aux déplacements relatifs du capot mobile 30 vis-à-vis du cadre avant 15 ne sont pas dégradés.

Sur la figure 5, le corps interne 514 de l'actionneur 51 est déployé au maximum. Le capot mobile 30 est ainsi déplacé vers l'aval de la nacelle d'une longueur sensiblement égale à la longueur des grilles de déviation 15 pour être pleinement ouvert.

Simultanément, le corps externe 512 est actionné vers l'aval entraînant le pivotement des panneaux 41 autour de son pivot à l'intérieur de la veine 13 pour qu'ils jouent pleinement leur rôle d'inverseur de poussée obturant la veine 13 pour forcer l'air à se diriger au travers des grilles de déviation 15.

Comme illustré sur la figure 5, de part les pas de filetage choisis, le corps externe 512 se déplace plus rapidement que le corps interne 514 et les deux points d'entraînement respectivement de la bielle 61 et du capot mobile 30 sur l'actionneur 51 ont tendance à se rejoindre.

Avantageusement, le mouvement de translation du capot mobile 30 et le mouvement de rotation du panneau 41 de la tuyère 40 sont automatiquement synchronisés pour réaliser l'inversion de poussée.

Il est à noter que le mode de réalisation décrit en référence aux figures 1 à 5 n'est pas limitatif.

Ainsi, une variante de réalisation peut prévoir de relier différemment entre eux les trois corps tubulaires de l'actionneur 51 aux moyens d'entraînement en rotation 519 et aux deux parties mobiles, à savoir le capot 30 et le panneau 41 de la tuyère 40.

Ainsi, dans un autre exemple non limitatif, le corps externe 512 de l'actionneur peut être adapté pour déplacer le capot mobile 30 tandis que le corps interne 514 peut être adapté pour déplacer le panneau 41 de la tuyère 40.

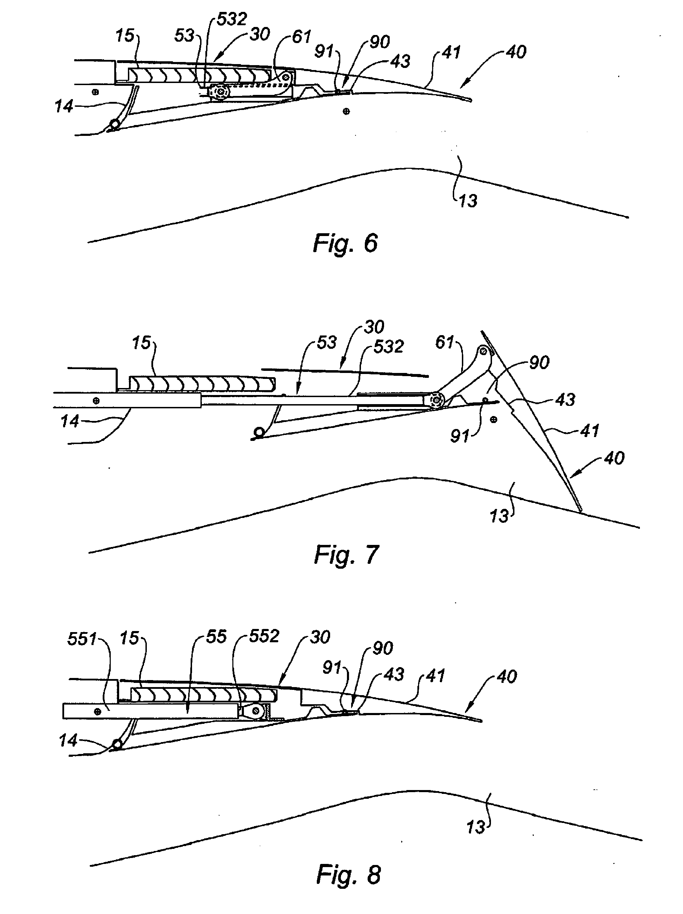

Dans un second mode de réalisation de la présente invention illustré sur les figures 6 à 8, les moyens d'actionnement 50 comprennent deux actionneurs linéaires 53,55 indépendants dédiés, respectivement, au pivotement des panneaux 41 mobiles de la tuyère 40 et au déplacement du capot mobile 30.

Ces actionneurs 53,55 sont associés à des moyens de commande (non visibles) adaptés pour activer indépendamment l'un de l'autre le pivotement de chaque panneau 41 vers une position entrainant la variation de section de la tuyère 40 ou vers une position où il obstrue la veine 13 de flux froid et le déplacement du capot mobile 30.

Ces moyens de commande sont ainsi aptes à réaliser un déplacement différentiel contrôlé du capot 30 et du panneau 41.

Ceci offre l'avantage de pouvoir conserver le capot mobile 30 fixe c'est à dire dans sa position de fermeture des grilles de déviation 15 en jet direct lors du réglage de la section de tuyère 40 par les panneaux mobiles 41.

Plus précisément, en référence aux figures 6 et 7, un premier actionneur 53 dédié au mouvement de rotation des panneaux 41 comprend une base cylindrique 531 à l'intérieur de laquelle est logée une tige 532.

La base 531 est destinée à être rattachée au cadre avant 14 tandis que la tige 532 est reliée, à son extrémité aval, à l'extrémité amont du panneau 41 par l'intermédiaire d'au moins une bielle d'entrainement 61 articulée sur un axe d'entrainement transversal prévu sur sa structure.

Cette bielle d'entrainement 61 assure le pivotement du panneau 41 correspondant lors d'un déplacement de la tige 532 vers l'amont ou vers l'aval de la nacelle.

Ce mode de réalisation offre ainsi les mêmes avantages que le premier mode de réalisation décrit en référence aux figures 1 à 5.

En référence à la figure 8, la partie interne du capot mobile 30 est reliée à au moins une extrémité d'un second actionneur 55 apte à permettre le déplacement du capot mobile 30 en amont ou en aval de la nacelle.

L'extrémité aval de la tige 552 de l'actionneur 55 est reliée à la structure interne du capot 30 tandis que la base 551 de l'actionneur 55 est fixée, à son extrémité amont, au cadre avant 14.

Les figures 6 et 7 illustrent différentes positions des panneaux mobiles 41.

Sur la figure 6, le capot mobile 30 est en position de fermeture recouvrant les grilles de déviation 15.

Par ailleurs, la tige 532 du premier actionneur 53 n'étant pas étendue, le capot 30 présente une section de tuyère habituelle.

Sur la figure 7, les moyens de commande de deux actionneurs 53,55 sont adaptés pour déplacer automatiquement selon des courses différentes le capot 30 et le panneau 41 lors de l'inversion de poussée.

Ainsi, la tige 532 du premier actionneur 53 a été étendue à une longueur adaptée vers l'aval de la nacelle entrainant le pivotement des panneaux 41 par l'intermédiaire de la bielle d'entrainement 61 vers l'intérieur de la veine 13 afin de jouer pleinement leur rôle d'inverseur de poussée obturant la veine 13.

La tige 552 du second actionneur 55 a également été étendue à une longueur adaptée afin d'entrainer le capot 30 vers l'aval de la nacelle découvrant les grilles de déviation 15.

Par ailleurs, lors du réglage de la section de tuyère 40, les moyens de commande sont adaptés pour entrainer le pivotement des panneaux 41 vers l'intérieur ou l'extérieur de la veine 13, le capot 30 lui restant fixe.

En référence aux figures 1 et 3 à 5, le dispositif d'inversion de poussée comprend, en outre, des moyens d'étanchéité amont 80 entre la veine de flux froid 13 et l'externe de la nacelle agencés sous les grilles de déviation 15.

Ces moyens d'étanchéité amont 80 sont, de préférence, portés par le capot 30.

Ils comprennent un joint d'étanchéité 81 préférentiellement porté par un prolongement 82 amont de la partie interne du capot mobile 30 au contact du cadre avant 14.

Ceci permet d'assurer un contact étanche entre la structure fixe du dispositif 20 et le capot mobile 30 dans les phases de jet direct c'est à dire lors de la variation de section de la tuyère 40.

Les moyens d'étanchéité amont 80 comprennent, en outre, un tablier amont 83 destiné à rendre étanche partiellement ou complètement l'aval des grilles de déviation 15.

Ce tablier 83 s'étend, en amont de la partie interne du capot mobile 30, en direction des grilles de déviation 15 jusqu'à proximité de ces dernières.

Il peut être destiné à servir de bouclier au flux froid l'obligeant à se diriger vers les grilles de déviation 15 lors de l'inversion de poussée.

Par ailleurs, le dispositif d'inversion de poussée 20 comprend des moyens d'étanchéité aval 90 entre la veine de flux froid 13 et l'externe de la nacelle agencés sous les panneaux 41 de la tuyère 40.

Ces moyens d'étanchéité aval 90 comprennent un joint d'étanchéité 91 porté par l'extrémité aval de la structure interne du capot mobile 30 au contact d'un déroutage 43 sur la face interne du panneau mobile 41 afin d'assurer une étanchéité relative à l'interface entre le capot 30 et les panneaux 41.

Dans une variante de réalisation, les moyens d'étanchéité aval 90 peuvent être portés par le panneau mobile 41 lui-même.

Par ailleurs, on a représenté sur la figure 10 une variante de réalisation de la présente invention dans laquelle le dispositif d'inversion de poussée 20 comprend, en outre, des moyens de guidage 100 de l'actionneur linéaire 51.

Ces moyens de guidage 100 sont destinés à lutter contre le flambage dans la structure de l'actionneur 51 de par la présence des bielles fournissant des efforts non concourant avec l'axe principal de l'actionneur 51.

Plus précisément, le corps externe 512 de l'actionneur 51 est monté mobile dans deux glissières 101,102 latérales de guidage en translation ménagées dans la structure du capot mobile 30.

Ces glissières 101, 102 sont adaptées pour couvrir toute la longueur de déplacement du corps externe 512 de l'actionneur 51.

Chacune d'entre elles est pourvue d'un galet 110 et est destinée à recevoir l'axe transversal d'entrainement des deux bielles d'entrainement 61 qui entoure le corps externe 512.

Avec un tel guidage, le corps externe 512 de l'actionneur 51 ne subit pas d'effort parasite venant des bielles 61 et le risque de flambage est éliminé.

De plus, dans cette variante de réalisation, il est nécessaire de ne pas créer de montage de points hyperstatique alignés entre les deux points d'entraînement du capot mobile 30 et du panneau 41.

On définit, par conséquent, un jeu radial pour l'entrainement du capot mobile par le corps interne de l'actionneur.

Dans un exemple non limitatif, le corps interne 514 de l'actionneur 51 est relié au capot mobile 30 par un axe transversal d'entrainement placé dans une cavité oblongue s'étendant dans une direction perpendiculaire à la direction de déplacement du capot 30.

On peut, également, citer comme exemple soit la mise en place d'une interface élastique entre les deux éléments soit l'ajout d'une bielle d'entrainement reliée de part et d'autre au capot mobile 30 et au corps interne 514 et orientée dans la direction de l'axe principal de l'actionneur 51.

En référence aux figures 11 et 12, un troisième mode de réalisation de la présente invention propose d'associer la ou les bielles d'entrainement 61 des panneaux 41 à un carénage 62.

Ceci offre l'avantage de réduire les défauts de continuité aérodynamique des lignes externes de la nacelle au niveau de la fixation des bielles d'entrainement 61.

Ce carénage présente un profil en forme de P tournée de 90°.

De préférence, il est monté rigide par la tête du P sur la bielle d'entrainement 61.

Par ailleurs, il est placé entre le capot mobile 30 et le panneau 41 de la tuyère 40 en aval.

La barre du P est montée dans une découpe 31 ménagée sur la structure externe du capot mobile 30, ceci afin d'assurer la continuité aérodynamique entre la structure externe du capot mobile 30 et le panneau 41 en aval.

Sur la figure 13, on observe un quatrième mode de réalisation de la présente invention dans lequel on prévoit un déroutage 44 particulier pour l'extrémité amont des panneaux mobiles 41 de la tuyère.

Ce déroutage 44 est destiné à assurer la continuité des lignes aérodynamiques externes de la nacelle lors du réglage de la section de tuyère 40 et, plus précisément, lors de la réduction de section de cette dernière.

Ainsi, l'extrémité amont du panneau 41 adjacente à la structure externe du capot mobile 30 présente une forme de dégagement qui peut être biseautée 44, ce qui permet au panneau 41 de ne pas venir en débordement des lignes aérodynamiques externes de la nacelle lorsqu'il pivote autour de son axe pivot 42.

L'impact de la rotation du panneau 41 sur la continuité aérodynamique des lignes externes de la nacelle est minimisé.

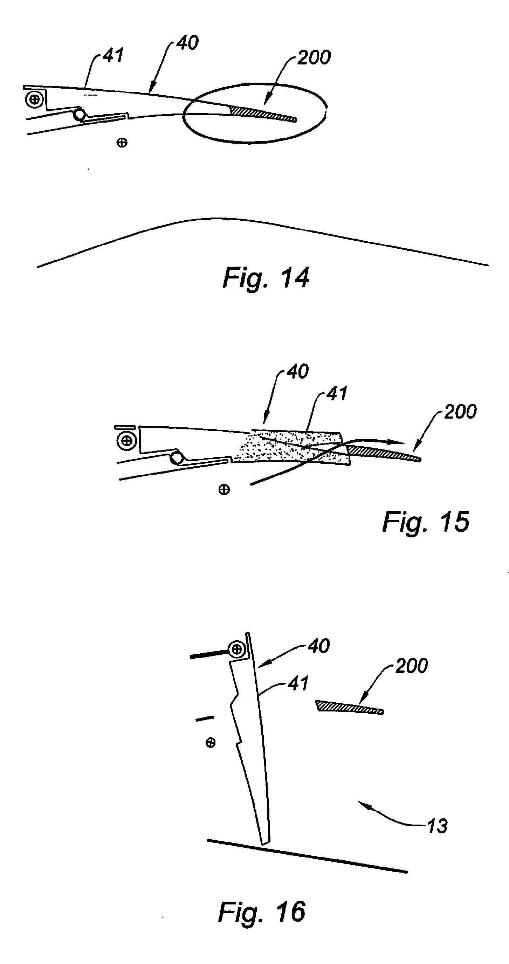

Par ailleurs, dans un cinquième mode de réalisation de la présente invention illustré sur les figures 14 à 16, une virole 200 aval fixe est ménagée à l'extrémité aval des panneaux mobiles 41 de la tuyère 40.

Ceci offre l'avantage de conserver une section de tuyère en jet direct réglée dans laquelle les écarts de tolérance de section sont minimisés.

Ainsi, tel qu'illustré respectivement sur les figures 15 à 16, la virole 200 reste fixe lors du changement de position des panneaux mobiles 41 en position de réduction ou d'augmentation de la section de tuyère 40 et lors de leur pivotement pour obturer la veine 13 de flux froid réalisant l'inversion de poussée.

Une variante de réalisation prévoit une virole 200 adaptée pour supporter, à son extrémité aval, une surface complémentaire de type chevrons.

Bien évidemment, l'invention ne se limite pas aux seules formes de réalisation du dispositif d'inversion de poussée décrites ci-dessus à titre d'exemples mais elle embrasse au contraire toutes les variantes possibles.

Ainsi, la présente invention peut être appliquée à un dispositif d'inversion de poussée ne comprenant pas de grilles de déviation de flux froid.

## Revendications

1. Dispositif d'inversion de poussée (20) comprenant au moins un capot mobile (30) monté en translation selon une direction sensiblement parallèle à un axe longitudinal d'une nacelle apte à passer alternativement d'une position de fermeture dans laquelle il assure la continuité aérodynamique de la nacelle à une position d'ouverture dans laquelle il ouvre un passage dans la nacelle destiné à un flux dévié, ledit capot mobile (30) étant également prolongé par au moins une section de tuyère variable (40) comprenant au moins un panneau (41) monté mobile en rotation, ledit panneau (41) étant adapté pour, d'une part, pivoter vers au moins une position entrainant une variation de la section de la tuyère (40) et, d'autre part, pivoter vers une position dans laquelle il obstrue une veine (13) de flux froid formée entre une structure fixe de carénage d'un turboréacteur (12) et la nacelle, le capot mobile (30) et le panneau (41) étant associés à des moyens d'actionnement (50) aptes à activer leur déplacement respectif en translation et en rotation **caractérisé en ce que** lesdits moyens d'actionnement (50) sont reliés à une extrémité amont du panneau (41) par une bielle d'entrainement (61) montée mobile autour de points d'ancrage respectivement sur le panneau (41) correspondant et sur les moyens d'actionnement (50) associés.

2. Dispositif d'inversion de poussée selon la revendication 1 **caractérisé en ce que** deux bielles d'entrainement (61) entourent les moyens d'actionnement (50) du panneau (41).

3. Dispositif d'inversion de poussée selon l'une des revendications 1 à 2 **caractérisé en ce que** la ou les bielles d'entrainement (61) présentent une forme coudée.

4. Dispositif d'inversion de poussée selon l'une des revendications 1 à 3 **caractérisé en ce que** la ou les bielles d'entrainement (61) sont associées à un carénage (62) de sorte que la continuité aérodynamique des lignes externe de la nacelle est assurée.

5. Dispositif d'inversion de poussée selon l'une des revendications 1 à 4 **caractérisé en ce que** les moyens d'actionnement (50) comprennent un actionneur linéaire (51) formé de trois corps concentriques, à savoir, un corps central (513), un corps externe (512) et un corps interne (514), tous trois formant tiges, le corps central (513) présentant un premier filetage (516), externe, apte à coopérer avec un filetage (515) correspondant du corps externe (512) et un deuxième filetage (517), interne, apte à coopérer avec un filetage (518) correspondant du corps interne, l'un des corps étant bloqué en translation et apte à être relié à des moyens d'entraînement (519) en rotation adaptés tandis que les deux autres corps, destinés chacun à être relié au capot (30) et au panneau (41) à entraîner, sont libres en translation et bloqués en rotation.

6. Dispositif d'inversion de poussée selon la revendication 5 **caractérisé en ce que** le corps relié aux moyens d'entraînement (519) en rotation est le corps central (513), le corps interne (514) est destiné à être relié au capot mobile (30) tandis que le corps externe (512) est destiné à être relié à la bielle d'entraînement (61) en pivotement du panneau (41).

7. Dispositif d'inversion de poussée selon l'une des revendications 5 à 6 **caractérisé en ce que** le filetage externe (516) du corps central (513) possède un pas supérieur au pas présenté par le filetage interne (517).

8. Dispositif d'inversion de poussée selon l'une des revendications 1 à 4 **caractérisé en ce que** les moyens d'actionnement (50) comprennent deux actionneurs linéaires distincts (53,55) associés respectivement au capot (30) et au panneau (41) à entrainer, chacun des actionneurs comprenant une tige (532,552) apte à permettre, respectivement, le pivotement du panneau (41) vers une position où il obstrue la veine (13) de flux froid et vers une position entrainant la variation de la section de la tuyère ainsi que le déplacement en translation du capot (30).

9. Dispositif d'inversion de poussée selon la revendication 8 **caractérisé en ce que** les moyens d'actionnement (50) sont associés à des moyens de commande aptes à réaliser un déplacement différentiel contrôlé du panneau (41) et du capot (30) à entrainer.

10. Dispositif d'inversion de poussée selon l'une des revendications précédentes **caractérisé en ce que** le panneau (41) est monté mobile en rotation autour d'un pivot (42) selon un axe perpendiculaire à l'axe longitudinal de la nacelle.

11. Dispositif d'inversion de poussée selon l'une des revendications précédentes **caractérisé en ce qu'**il comprend, en outre, des moyens d"étanchéité amont (80) entre la veine de flux froid (13) et l'externe de la nacelle agencés sous des moyens de déviation (15).

12. Dispositif d'inversion de poussée selon l'une des revendications précédentes **caractérisé en ce que** qu'il comprend, en outre, des moyens d"étanchéité (90) aval entre une structure interne du capot (30) et le panneau (41)

13. Dispositif d'inversion de poussée selon l'une des revendications précédentes **caractérisé en ce que** le panneau (41) est prolongé par une virole aval fixe (200).

14. Nacelle de turboréacteur double flux comprenant une section aval (10) équipée d'un dispositif d'inversion de poussée (20) selon l'une des revendications précédentes.

## Claims

1. A thrust reversing device (20) comprising at least one moving cowl (30) translatably mounted in a direction substantially parallel to a longitudinal axis of a nacelle capable of alternating between a closed position, in which it ensures the aerodynamic continuity of the nacelle, and an open position, in which it opens a passage in the nacelle intended for a deflected flow, said moving cowl (30) also being extended by at least one jet nozzle section (40) comprising at least one panel (41) rotatably mounted, said panel (41) being adapted so as to pivot toward at least one position causing a variation in the section of the nozzle (40) on the one hand, and to pivot toward a position in which it obstructs a cold flow tunnel (13) formed between a stationary fairing structure of a turbojet engine (12) and the nacelle on the other hand, the moving cowl (30) and the panel (41) being associated with actuating means (50) capable of actuating their respective translational and rotational movement, **characterized in that** said actuating means (50) are connected to an upstream end of the panel (41) by a driving connecting rod (61) movably mounted around anchoring points respectively on the corresponding panel (41) and the associated actuating means (50).

2. The thrust reversing device according to claim 1, **characterized in that** two driving connecting rods (61) surround the actuating means (50) of the panel (41).

3. The thrust reversing device according to one of claims 1 to 2, **characterized in that** the driving connecting rod(s) (61) have a bent shape.

4. The thrust reversing device according to one of claims 1 to 3, **characterized in that** the driving connecting rod(s) (61) are associated with a fairing (62) such that the aerodynamic continuity of the outer lines of the nacelle is ensured.

5. The thrust reversing device according to one of claims 1 to 4, **characterized in that** the actuating means (50) comprise a linear actuator (51) made from three concentric bodies, i.e., a central body (513), an outer body (512) and an inner body (514), all three forming rods, the central body (513) having a first outer thread (516) capable of cooperating with a corresponding thread (515) of the outer body (512) and a second inner thread (517), capable of cooperating with a corresponding thread (518) of the inner body, one of the bodies being translatably blocked and capable of being connected to suitable rotating means (519), while the other two bodies, each designed to be connected to the cowl (30) and the panel (41) to be driven, are free in translation and blocked in rotation.

6. The thrust reversing device according to claim 5, **characterized in that** the body connected to the rotation means (519) is the central body (513), the inner body (514) is designed to be connected to the moving cowl (30) while the outer body (512) is designed to be connected to the pivoting driving connecting rod (61) of the panel (41).

7. The thrust reversing device according to one of claims 5 to 6, **characterized in that** the outer thread (516) of the central body (513) has a pitch larger than the pitch of the inner thread (517).

8. The thrust reversing device according to one of claims 1 to 4, **characterized in that** the actuating means (50) comprise two distinct linear actuators (53, 55) respectively associated with the cowl (30) and the panel (41) to be driven, each of the actuators comprising a rod (532, 552) capable of respectively allowing the panel (41) to pivot toward a position where it covers the cold flow tunnel (13) and a position varying the section of the nozzle as well as the translation of the cowl (30).

9. The thrust reversing device according to claim 8, **characterized in that** the actuating means (50) are associated with control means capable of producing a controlled movement differential of the panel (41) and the cowl (30) to be driven.

10. The thrust reversing device according to one of the preceding claims, **characterized in that** the panel (41) is rotatably mounted around a pivot (42) along an axis perpendicular to the longitudinal axis of the nacelle.

11. The thrust reversing device according to one of the preceding claims, **characterized in that** it also comprises upstream sealing means (80) between the cold flow tunnel (13) and the outside of the nacelle arranged under cascade means (15).

12. The thrust reversing device according to one of the preceding claims, **characterized in that** it also comprises downstream sealing means (90) between an inner structure of the cowl (30) and the panel (41).

13. The thrust reversing device according to one of the preceding claims, **characterized in that** the panel (41) is extended by a downstream shroud (200).

14. A dual-flow turbojet engine nacelle comprising a downstream section (10) equipped with a thrust reversing device (20) according to one of the preceding claims.

## Patentansprüche

1. Schubumkehrvorrichtung (20), die mindestens eine bewegbare Abdeckung (30) umfasst, die gemäß einer Richtung etwa parallel zu einer Längsachse einer Gondel verschiebbar montiert ist, die imstande ist, abwechselnd von einer geschlossenen Position, in der sie die aerodynamische Kontinuität der Gondel gewährleistet, in eine geöffnete Position zu wechseln, in der sie einen Durchgang in der Gondel öffnet, die für einen abgelenkten Strom bestimmt ist, zu wechseln, wobei die bewegbare Abdeckung (30) ebenfalls von mindestens einem variablen Düsenquerschnitt (40) verlängert wird, der mindestens eine in Rotation bewegbar montierte Platte (41) umfasst, wobei die Platte (41) geeignet ist, einerseits in mindestens eine Position zu schwenken, die eine Änderung des Düsenquerschnitts (40) bewirkt und andererseits in eine Position zu schwenken, in der sie einen Kaltstromkanal (13) blockiert, der zwischen einer starren Beschlagstruktur eines Turbotriebwerks (12) und der Gondel gebildet wird, wobei die bewegbare Abdeckung (30) und die Platte (41) mit Betätigungsmitteln (50) verbunden sind, die imstande sind, ihre jeweilige verschiebende und rotierende Verlagerung zu aktivieren, **dadurch gekennzeichnet, dass** die Betätigungsmittel (50) mit einem oberstromigen Ende der Platte (41) durch eine Antriebspleuelstange (61) verbunden sind, die um Verankerungspunkte jeweils auf der entsprechenden Platte (41) und auf den verbundenen Betätigungsmitteln (50) bewegbar montiert ist.

2. Schubumkehrvorrichtung nach Anspruch 1, **dadurch gekennzeichnet, dass** zwei Antriebspleuelstangen (61) die Betätigungsmittel (50) der Platte (41) umgeben.

3. Schubumkehrvorrichtung nach einem der Ansprüche 1 bis 2, **dadurch gekennzeichnet, dass** die Antriebspleuelstange(n) (61) eine gekrümmte Form aufweisen.

4. Schubumkehrvorrichtung nach einem der Ansprüche 1 bis 3, **dadurch gekennzeichnet, dass** die Antriebspleuelstange(n) (61) mit einer Verkleidung (62) derart verbunden sind, dass die externe aerodynamische Linienkontinuität der Gondel gewährleistet ist.

5. Schubumkehrvorrichtung nach einem der Ansprüche 1 bis 4, **dadurch gekennzeichnet, dass** die Betätigungsmittel (50) einen linearen Aktuator (51) umfassen, der von drei konzentrischen Körpern gebildet wird, nämlich einem zentralen Körper (513), einem externen Körper (512) und einem internen Körper (514), wobei alle drei Stangen bilden, wobei der zentrale Körper (513) ein erstes Außengewinde (516) aufweist, das imstande ist, mit einem entsprechenden Gewinde (515) des externen Körpers (512) zusammenzuarbeiten, und ein zweites Innengewinde (517), das imstande ist, mit einem entsprechenden Gewinde (518) des internen Körpers zusammenzuarbeiten, wobei einer der Körper in Verschiebung blockiert ist und imstande, mit geeigneten Antriebsmitteln (519) rotierend verbunden zu sein, wogegen die zwei anderen Körper, die jeweils dazu bestimmt sind, mit der anzutreibenden Abdeckung (30) und der Platte (41) verbunden zu sein, in Verschiebung frei und in Rotation blockiert sind.

6. Schubumkehrvorrichtung nach Anspruch 5, **dadurch gekennzeichnet, dass** der mit den Antriebsmitteln (519) rotierend verbundene Körper der zentrale Körper (513) ist, wobei der interne Körper (514) dazu bestimmt ist, mit der bewegbaren Abdeckung (30) verbunden zu sein, wogegen der externe Körper (512) dazu bestimmt ist, mit der Antriebspleuelstange (61) verbunden zu sein, die die Platte (41) schwenkt.

7. Schubumkehrvorrichtung nach einem der Ansprüche 5 bis 6, **dadurch gekennzeichnet, dass** das Außengewinde (516) des zentralen Körpers (513) eine Ganghöhe aufweist, die größer ist als die Ganghöhe des Innengewindes (517).

8. Schubumkehrvorrichtung nach einem der Ansprüche 1 bis 4, **dadurch gekennzeichnet, dass** die Betätigungsmittel (50) zwei unterschiedliche lineare Aktuatoren (53, 55) umfassen, die jeweils mit der anzutreibenden Abdeckung (30) und der Platte (41) verbunden sind, wobei jeder der Aktuatoren eine Stange (532, 552) umfasst, die imstande ist, jeweils das Schwanken der Platte (41) in eine Position, in der sie den Kaltstromkanal (13) verschließt und eine Position, die die Änderung des Düsenquerschnitts sowie die verschiebende Verlagerung der Abdickung (30) bewirkt, zu erlauben.

9. Schubumkehrvorrichtung nach Anspruch 8, **dadurch gekennzeichnet, dass** die Betätigungsmittel (50) mit Steuermitteln verbunden sind, die imstande sind, eine kontrollierte Differentialverlagerung der anzutreibenden Platte (41) und der Abdeckung (30) durchzuführen.

10. Schubumkehrvorrichtung nach einem der vorangehenden Ansprüche, **dadurch gekennzeichnet, dass** die Platte (41) gemäß einer Achse senkrecht zur Längsachse der Gondel frei rotierend um einen Stift (42) montiert ist.

11. Schubumkehrvorrichtung nach einem der vorangehenden Ansprüche, **dadurch gekennzeichnet, dass** sie ferner oberstromige Dichtungsmittel (80) zwischen dem Kaltstromkanal (13) und dem Äußeren der Gondel umfasst, die unter Ablenkmitteln (15) ausgebildet sind.

12. Schubumkehrvorrichtung nach einem der vorangehenden Ansprüche, **dadurch gekennzeichnet, dass** sie ferner unterstromige Dichtungsmittel (90) zwischen einer internen Struktur der Abdeckung (30) und der Platte (41) umfasst.

13. Schubumkehrvorrichtung nach einem der vorangehenden Ansprüche, **dadurch gekennzeichnet, dass** die Platte (41) durch einen starren unterstromigen Beschlag (200) verlängert wird.

14. Gondel für Turbofantriebwerk, die einen oberstromigen Sektor (10) umfasst, der mit einer Schubumkehr (20) nach einem der vorangehenden Ansprüche ausgestattet ist.
